# EUROPEAN PATENT APPLICATION

(11) **EP 4 520 786 A1**
(43) Date of publication of application: **12.03.2025**
(21) Application number: 24761152.8
(22) Date of filing: 24.01.2024
(51) Int. Cl.: C08L 27/18, C08L 29/10, C08K 3/36, C08K 9/06, C08K 3/34, C08K 3/30, C08K 3/22

(54) **SEMICONDUCTOR SEAL RING RUBBER MATERIAL, PREPARATION METHOD THEREFOR, AND USE THEREOF**

(30) Priority: 13.07.2023 CN 202310860467
(71) Applicant: IC Seal Co., Ltd, Shanghai 201306 (CN)
(72) Inventor: CHENG, Qingkui, Pudong New Area, Shanghai 201306 (CN); LI, Hong, Pudong New Area, Shanghai 201306 (CN); ZHANG, Guoqiang, Pudong New Area, Shanghai 201306 (CN)
(74) Representative: Canzler & Bergmeier Patentanwälte Partnerschaft mbB
(86) International application number: PCT/CN2024/073855
(87) International publication number: WO 2025/011002

(57) **Abstract**

The present disclosure provides a rubber material for semiconductor seal rings, and it includes following components in parts by weight: 100 to 120 parts of perfluoroether rubber, 15 to 20 parts of silicon dioxide, 1 to 5 parts of modified aluminosilicate, 10 to 15 parts of filler, 1 to 2 parts of colorant, 0.5 to 2 parts of crosslinking agent, and 0.5 to 4 parts of co-crosslinking agent. The present disclosure also provides a method for preparing a rubber material for semiconductor seal rings, the rubber material prepared by which has: hardness Shore M: 85 ± 5, tensile strength ≥ 11.0MPa, elongation at break ≥ 140%, 100% Modulus ≥ 7.2MPa, compression set ≤ 30%, and weight change rate ≤ 3% after etching, indicating that the rubber material is highly suitable for semiconductor equipment processing. The present disclosure further provides the use of the rubber material for semiconductor seal rings in the field of semiconductor processing, which is mainly used in dry etching, vapor deposition and other processes in semiconductor processing.

## Description

### FIELD OF THE INVENTION

The present disclosure generally relates to the technical field of semiconductor materials, and in particular to a rubber material for semiconductor seal rings and a preparation method and use thereof.

### BACKGROUND OF THE INVENTION

Perfluoroether rubber, primarily composed of tetrafluoroethylene and perfluoroalkyl vinyl ether, is synthesized by copolymerizing these primary components with a minor amount of a cross-linkable third monomer. Perfluoroether rubber lacks C-H bonds, and its C-C bonds are essentially enveloped by F atoms. This endows the polymer with notable properties such as resistance to chemicals, and high-temperature steam, low release and precipitation, and resistance to plasma.

Perfluoroether rubber is also known as FFKM, and is an essential engineering material. It is employed in situations where other elastomers are not suitable - such as extreme temperatures or highly corrosive environments. It is particularly applicable to the semiconductor industry. Present technology necessitates the use of a substantial amount of reinforcing agents or fillers to modify the perfluoroether rubber. However, as the quantity of these agents or fillers increases, it adversely impacts the product's compression set, which can lead to a significant permanent deformation in the sealing ring. If the compression set exceeds 30% (for example, an AS568-214 O-ring after 70 hours at 204°C), the sealing ring will fail, rendering it unable to provide the necessary sealing effect. This poses a challenge for formula development. Therefore, it is an urgent problem to develop a semiconductor sealing material that not only performs well but is also cost-effective.

### SUMMARY OF THE INVENTION

In view of the disadvantages of the above-described related technology, the present disclosure provides a rubber material for semiconductor seal rings and a preparation method and use thereof, so as to obtain a semiconductor sealing material that not only performs well but is also cost-effective.

The rubber material for semiconductor seal rings includes following components in parts by weight: 100 to 120 parts of perfluoroether rubber, 15 to 20 parts of silicon dioxide, 1 to 5 parts of modified aluminosilicate, 10 to 15 parts of filler, 1 to 2 parts of colorant, 0.5 to 2 parts of crosslinking agent, and 0.5 to 4 parts of co-crosslinking agent.

The method for preparing the rubber material for semiconductor seal rings includes:
1) mixing the perfluoroether rubber, silicon dioxide, modified aluminosilicate, filler, and colorant evenly to obtain a masterbatch;
2) adding the co-crosslinking agent and crosslinking agent to the masterbatch obtained in step 1), performing a plate vulcanization to produce a vulcanized product, and setting the vulcanized product aside for future use;
3) performing a second vulcanization on the vulcanized product obtained in step 2), and obtaining the rubber material for semiconductor seal rings after water grinding and drying.

The present disclosure also provides use of the rubber material for semiconductor seal rings as described above in the field of semiconductor processing.

The present disclosure also provides a semiconductor seal ring made from the rubber material for semiconductor seal rings as described above.

In summary, the rubber material for semiconductor seal rings of the present disclosure has the following beneficial effects:

The presently disclosed rubber material for semiconductor sealing rings is based on perfluoroether rubber. By incorporating fillers such as silicon dioxide, modified aluminosilicate, and other inorganic fillers and pigments, a rubber material that satisfies the demands of semiconductor products has been developed. This material exhibits a Shore M hardness of 85±5, a tensile strength of at least 11.0MPa, an elongation at break of at least 140%, a 100% modulus of at least 7.2MPa, a compression set of no more than 30%, and a weight change rate of no more than 3% after etching. This enables the application of perfluoroether rubber in the semiconductor field, despite its initial inability to meet the requirements of semiconductor products due to subpar tensile strength, hardness, and modulus. This not only reduces costs but also results in a rubber material with excellent overall performance. The presently disclosed rubber material is suitable for use in semiconductor equipment that requires resistance to CH₄ and O₂ plasmas, making it ideal for processes like dry etching and vapor deposition.

### DETAILED DESCRIPTION

The embodiments of the present disclosure will be described below. Those skilled can easily understand advantages and effects of the present disclosure according to contents disclosed by the specification. The present disclosure can also be implemented or applied through other different exemplary embodiments. Various modifications or changes can also be made to all details in the specification based on different points of view and applications without departing from the spirit of the present disclosure.

It should be noted that the drawings provided in this disclosure only illustrate the basic concept of the present disclosure in a schematic way, so the drawings only show the components closely related to the present disclosure. The drawings are not necessarily drawn according to the number, shape and size of the components in actual implementation; during the actual implementation, the type, quantity and proportion of each component can be changed as needed, and the components' layout may also be more complicated.

A first aspect of the present disclosure provides a rubber material for semiconductor seal rings, which includes following components in parts by weight: perfluoroether rubber, 100-120 parts, 100-105 parts, 105-110 parts, 110-115 parts, or 115-120 parts; silicon dioxide, 15-20 parts, 15-16 parts, 16-17 parts, 17-18 parts, 18-19 parts, or 19-20 parts; modified aluminosilicate, 1-5 parts, 1-2 parts, 2-3 parts, 3-4 parts, or 4-5 parts; filler, 10-15 parts, 10-11 parts, 11-12 parts, 12-13 parts, 13-14 parts, or 14-15 parts; colorant, 1-2 parts, 1-1.5 parts, or 1.5-2 parts; crosslinking agent, 0.5-2 parts, 0.5-1 parts, 1-1.5 parts, or 1.5-2 parts; co-crosslinking agent, 0.5-4 parts, 0.5-1 parts, 1-1.5 parts, 1.5-2 parts, 2-2.5 parts, 2.5-3 parts, 3-3.5 parts, or 3.5-4 parts.

Silicon dioxide is a commonly used reinforcing agent in fluororubber, and it can improve the tensile strength and hardness of raw rubber. The use of aluminosilicate and fillers can not only reduce costs but also has a reinforcing effect. The traditional aluminosilicate contains a large number of hydroxyl groups, making it easy to form hydrogen bonds, which will lead to agglomeration and is detrimental to the reinforcing effect. However, the modified aluminosilicate has better dispersibility in the rubber and has a better reinforcing effect. The silicon dioxide and fillers are alkaline as a whole, and the modified aluminosilicate is alkaline as a whole. Because the perfluoroether rubber will have residual C-H bonds during the polymerization process, the fracture and recombination of the ionic bonds will produce HF acid to inhibit the cross-linking of the perfluoroether rubber. The use of alkaline fillers will further improve the cross-linking density and reduce the compression set. The colorant can also function as fillers, which helps in reducing the overall costs. Additionally, it contributes to the whitening of the product, thereby enhancing its visual appeal.

The perfluoroether rubber is obtained by copolymerization of tetrafluoroethylene, perfluoroalkyl vinyl ether, and halogen-containing vulcanization point monomers.

As an example, the perfluoroalkyl vinyl ether is perfluoromethyl vinyl ether.

As an example, halogen in the halogen-containing vulcanization point monomers is iodine or bromine. Preferably, the halogen in the halogen-containing vulcanization point monomer is iodine.

Preferably, a structure of the perfluoroether rubber is shown below:

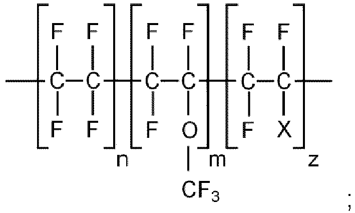

X is iodine; n ranges from 1 to 10000, for example, 1 to 100, 100 to 500, 500 to 1000, 1000 to 1500, 1500 to 2000, 2000 to 2500, 2500 to 3000, 3000 to 3500, 3500 to 4000, 4000 to 4500, 4500 to 5000, 5000 to 5500, 5500 to 6000, 6000 to 6500, 6500 to 7000, 7000 to 7500, 7500 to 8000, 8000 to 8500, 8500 to 9000, 9000 to 9500, or 9500 to 10000. m ranges from 1 to 10000, for example, 1 to 100, 100 to 500, 500 to 1000, 1000 to 1500, 1500 to 2000, 2000 to 2500, 2500 to 3000, 3000 to 3500, 3500 to 4000, 4000 to 4500, 4500 to 5000, 5000 to 5500, 5500 to 6000, 6000 to 6500, 6500 to 7000, 7000 to 7500, 7500 to 8000, 8000 to 8500, 8500 to 9000, 9000 to 9500, or 9500 to 10000. z ranges from 1 to 10000, for example, 1 to 100, 100 to 500, 500 to 1000, 1000 to 1500, 1500 to 2000, 2000 to 2500, 2500 to 3000, 3000 to 3500, 3500 to 4000, 4000 to 4500, 4500 to 5000, 5000 to 5500, 5500 to 6000, 6000 to 6500, 6500 to 7000, 7000 to 7500, 7500 to 8000, 8000 to 8500, 8500 to 9000, 9000 to 9500, or 9500 to 10000. Preferably, the value of n: m: z is 60 to 70: 30 to 40: 0.2 to 3. For example, 60 to 65: 30 to 40: 0.2 to 3, 65 to 70: 30 to 40: 0.2 to 3, 60 to 70: 30 to 35: 0.2 to 3, 60 to 70: 35 to 40: 0.2 to 3, 60 to 70: 30 to 40: 0.2 to 0.5, 60 to 70: 30 to 40: 0.5 to 1, 60 to 70: 30 to 40: 1 to 1.5, 60 to 70: 30 to 40: 1.5 to 2, 60 to 70: 30 to 40: 2 to 2.5, or 60 to 70: 30 to 40: 2.5 to 3. Preferably, the perfluoroether rubber includes perfluoroether rubber produced in China, and graded 3F 4013.

The Mooney viscosity (ML1 +10) of the perfluoroether rubber at 121 °C ranges from 30 to 100. As an example, the Mooney viscosity (ML1 +10) of the perfluoroether rubber at 121 °C may be, for example, 30-100, 30-60, 60-80, or 80-100. Preferably, the Mooney viscosity (ML1 +10) of the perfluoroether rubber at 121 °C is 60.

In the rubber material for semiconductor seal rings of the present disclosure, the silicon dioxide has a specific surface area of 60-100m²/g, 60-70m²/g, 70-80m²/g, 80-90m²/g, or 90-100m²/g, and a pH value of 7-10. Preferably, the specific surface area of the silicon dioxide is 80 m²/g.

The modified aluminosilicate is obtained by surface modification of aluminosilicate by hexamethyldisilazane. The surface of aluminosilicate contains a large number of hydroxyl groups, which will form a large number of hydrogen bonds, making it easy for aluminosilicate to agglomerate, which is not conducive to its dispersion in rubber. The modification using hexamethyldisilazane can make the surface of aluminosilicate alkaline and thereby reducing hydrogen bonds formed thereon. Such modification also consumes HF acid generated in processing, which improves the cross-linking density of perfluoroether rubber, thereby reducing the permanent compression deformation.

The aluminosilicate in the modified aluminosilicate is one or more of sodium aluminosilicate and calcium aluminosilicate, wherein the aluminosilicate has a D50 particle size ≤ 2µm; for example, the D50 particle size is smaller than 0.3µm, or ranges from 0.3 to 0.5µm, 0.5 to 0.7µm, 0.7 to 0.9µm, 0.9µm to 1µm, 1 to 1.2µm, 1.2 to 1.4µm, 1.4 to 1.6µm, 1.6 to 1.8µm, or 1.8 to 2µm. Preferably, the aluminosilicate has a D50 particle size of 2 µm.

The filler includes one or more of sulfate, carbonate, silicate, metal oxide, and hydroxide. Preferably, the filler is sulfate. The sulfate includes one or more of barium sulfate, calcium sulfate, sodium sulfate, and potassium sulfate. Preferably, the sulfate is barium sulfate. The barium sulfate has a D50 particle size ≤ 5µm; for example, the D50 particle size is smaller than 0.5µm, or ranges from 0.5-1µm, 1-1.5µm, 1.5-2µm, 2-2.5µm, 2.5-3µm, 3-3.5µm, 3.5-4µm, 4-4.5µm, or 4.5-5µm. The pH value of the barium sulfate is 7 to 10. Preferably, the barium sulfate has D50 particle size of 3 µm.

The colorant includes one or more of titanium dioxide, zinc barium white, zinc white, and zinc sulfide. Preferably, the colorant is titanium dioxide. The titanium dioxide is preferably nano-titanium dioxide, and the nano-titanium dioxide has a particle size of 200-300 nm, for example, 200-220 nm, 220-240 nm, 240-260 nm, 260-280 nm, or 280-300 nm. The nano-titanium dioxide has a pH value of 6 to 8. Preferably, the nano-titanium dioxide has a particle size of 200 nm.

The crosslinking agent includes one or more of 2,5-dimethyl-2,5-bis (tert-butylperoxy) hexane (alias: bis-25), and 1,3-bis (tert-butylperoxyisopropyl) benzene (alias: tasteless DCP). Preferably, the crosslinking agent is bis-25.

The co-crosslinking agent is triallyl isocyanurate (alias: TAIC) or trimethylallyl isocyanate (alias: TMAIC). Preferably, the co-crosslinking agent is TAIC.

Properties of the rubber material for semiconductor sealing rings include one or more of:
a) Hardness, Shore M: 85 ± 5;
b) Tensile strength ≥ 11.0 MPa;
c) Elongation at break ≥ 140%;
d) 100% Modulus ≥ 7.2MPa;
e) Compression set ≤ 30%;
f) Weight change rate after etching ≤ 3%.

A second aspect of the present disclosure provides a method for preparing the rubber material for semiconductor seal rings as described above, and the method includes:
1) mixing the perfluoroether rubber, silicon dioxide, modified aluminosilicate, filler, and colorant evenly to obtain a masterbatch;
2) adding the co-crosslinking agent and crosslinking agent to the masterbatch obtained in step 1), performing a plate vulcanization to produce a vulcanized product, and setting the vulcanized product aside for future use;
3) performing a second vulcanization on the vulcanized product obtained in step 2), and obtaining the rubber material for semiconductor seal rings after water grinding and drying.

Specifically, in step 1), the modified aluminosilicate is prepared by: performing ultrasonic dispersion on the aluminosilicate in an organic solvent to obtain a suspension, adding hexamethyldisilazane, performing ultrasonic mixing, heating for reaction, centrifuging at room temperature, and vacuum drying to obtain the modified aluminosilicate.

The organic solvent includes one or more of toluene, and ethanol. Preferably, the organic solvent is toluene.

The duration of the ultrasonic dispersion ranges from 30 to 40min, for example, 30 to 32min, 32 to 34min, 34 to 36min, 36 to 38min or 38 to 40min. Preferably, the duration of the ultrasonic dispersion is 30 min.

The mass percentage of the hexamethyldisilazane to the aluminosilicate is 1-2 wt %, for example, 1-1.2 wt %, 1.2-1.4 wt %, 1.4-1.6 wt %, 1.6-1.8 wt %, or 1.8-2 wt %. Preferably, the mass percentage of the hexamethyldisilazane to the aluminosilicate is 1%.

The duration of the ultrasonic mixing ranges from 4 to 8min, for example, 4 to 5min, 5 to 6min, 6 to 7min, or 7 to 8min. Preferably, the duration of the ultrasonic mixing is 5 min.

The temperature of the heated reaction ranges from 70 to 100 °C, for example, 70 to 75 °C, 75 to 80 °C, 80 to 85 °C, 85 to 90 °C, 90 to 95 °C, or 95 to 100 °C. Preferably, the mixture is heated to 80°C for reaction.

The duration of the heated reaction ranges from 5 to 8h, for example, 5 to 6h, 6 to 7h, or 7 to 8h. Preferably, the heated reaction lasts for 6h.

The centrifuging is repeated for 4 to 6 times, for example, 4 to 5 times, or 5 to 6 times. Preferably, the centrifuging is repeated for 5 times.

The centrifugal rate of the centrifuging ranges from 10000 to 15000r/min, for example, 10000 to 11000r/min, 11000 to 12000r/min, 12000 to 13000r/min, 13000 to 14000r/min, or 14000 to 15000r/min. Preferably, the centrifugal rate is 12000 r/min.

The temperature of the vacuum drying ranges from 100 to 130 °C, for example, 100 to 105 °C, 105 to 110 °C, 110 to 115 °C, 115 to 120 °C, 120 to 125 °C, or 125 to 130 °C. Preferably, the temperature of the vacuum drying is 110°C.

The duration of the vacuum drying ranges from 7 to 10h, for example, 7 to 8h, 8 to 9h, or 9 to 10h. Preferably, the duration of the vacuum drying is 8h.

In step 1), the perfluoroether rubber, silicon dioxide, modified aluminosilicate, filler, and colorant are mixed at 120-140 °C, 120-125 °C, 125-130 °C, 130-135 °C, or 135-140 °C. Preferably, the components are mixed at 140°C.

In step 1), after the components are mixed evenly, they are discharged to an open mill at 145 to 165 °C to form sheets, and set aside for more than 16 hours to obtain the masterbatch. The temperature of the discharging may range from 145 to 150 °C, 150 to 155 °C, 155 to 160 °C or 160 to 165 °C. Preferably, the temperature of the discharging is 148°C.

In step 1), the set-aside time is greater than 16h. In step 2), before adding the co-crosslinking agent and the crosslinking agent, the masterbatch undergoes a thin-pass process, then the masterbatch is cut using left and right blades, wherein each side of the masterbatch is cut 2 to 4 times, 2 to 3 times, or 3 to 4 times, a roller speed of a front roller of the open mill is adjusted to 12 to 14 r/min, 12 to 13 r/min, or 13 to 14 r/min, and a roller speed of a rear roller of the open mill is adjusted to14 to 16 r/min, 14 to 15 r/min, or 15 to 16 r/min, then a roller distance of the open mill is adjusted to 0.5 to 0.8 mm, 0.5 to 0.6 mm, 0.6 to 0.7 mm, or 0.7 to 0.8 mm, then the co-crosslinking agent and the crosslinking agent are added. Preferably, after the thin-pass process, the left and right cutting blades each cut 3 times, and the roller speed of the front roller of the open mill is adjusted to 12 r/min, and the roller speed of the rear roller of the open mill is adjusted to 14 r/min, then the roller distance of the open mill is adjusted to 0.6 mm, then the co-crosslinking agent and the crosslinking agent are added.

In step 2), after adding the co-crosslinking agent and the crosslinking agent, triangular folds are created at a roller distance of 0.3 to 0.5mm; for example, the roller distance is adjusted to 0.3 to 0.4mm or 0.4 to 0.5mm when the triangular folds are created. Preferably, the triangular folds are created at a roller distance of 0.4 mm. The triangular folds are created for 15 to 20 times, for example, 15 to 16 times, 16 to 17 times, 17 to 18 times, 18 to 19 times, or 19 to 20 times. Preferably, the triangular folds are created for 20 times.

In step 2), the temperature of the plate vulcanization ranges from 155 to 190 °C, for example, 155 to 160 °C, 160 to 165 °C, 165 to 170 °C, 170 to 175 °C, 175 to 180 °C, 180 to 185 °C, or 185 to 190 °C. Preferably, the temperature of the plate vulcanization is 160°C.

In step 2), the pressure of the plate vulcanization ranges from 10 to 15MPa, for example, 10 to 11MPa, 11 to 12MPa, 12 to 13MPa, 13 to 14MPa, or 14 to 15MPa. Preferably, the pressure of the plate vulcanization is 11 MPa.

In step 2), the duration of the plate vulcanization is 4-7min, for example, 4-5min, 5-6min, or 6-7min. Preferably, the duration of the plate vulcanization is 4 min.

In step 2), the product is set aside for 16 to 20h, for example, 16 to 17h, 17 to 18h, 18 to 19h, or 19 to 20h.

In step 3), the temperature of the second vulcanization is 230-290 °C, for example, 230-240 °C, 240-250 °C, 250-260 °C, 260-270 °C, 270-280 °C, or 280-290 °C. Preferably, the temperature of the second vulcanization is 230°C.

In step 3), the duration of the second vulcanization is 4-16h, for example, 4-6h, 6-8h, 8-10h, 10-12h, 12-14h, or 14-16h. Preferably, the duration of the second vulcanization is 4 h.

The preparation of the rubber material for semiconductor seal rings of the present disclosure is carried out in a dust-free workshop of class 1,000 or lower. Semiconductor components require high product cleanliness. In regular processing workshops, there is often a significant amount of impurities such as dust and bacteria, which can impact the etching gas resistance of the sealing ring. By manufacturing the rubber material for semiconductor sealing rings in a thousand-level dust-free workshop, the product's excellent etching gas resistance is ensured.

A third aspect of the present disclosure provides a use of the rubber material for semiconductor seal rings as described above in the field of semiconductor processing.

A fourth aspect of the present disclosure provides a semiconductor seal ring made from the rubber material for semiconductor seal rings as described above.

### Embodiment 1

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 15 parts of silicon dioxide, 5 parts of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for second vulcanization at 230 °C, for 4h, and then obtain the rubber material for semiconductor seal rings after water grinding and drying.

The hexamethyldisilazane-modified sodium silicoaluminate is prepared as follows:
(1) Add sodium aluminosilicate to toluene solvent, and ultrasonically disperse it at room temperature with a 300w ultrasonic cleaner for 30 minutes to obtain a uniform suspension;
(2) Add 1 wt % hexamethyldisilazane to the suspension and ultrasonically mix for 5 min;
(3) Heat the ultrasonic cleaner to 80 °C and maintain a constant temperature for reaction for 6 hours;
(4) Centrifuge the reaction solution at 12000r/min at room temperature using a centrifuge, followed by five repetitions of centrifugation using toluene solution;
(5) Vacuum dry at 110 °C for 8 h, resulting in the modified sodium aluminosilicate.

Semiconductor seal rings made from the rubber material for semiconductor seal rings obtained in this embodiment have a high degree of cleanliness and can withstand temperature up to at least 210 °C.

### Embodiment 2

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 16 parts of silicon dioxide, 4 parts of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Embodiment 3

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 17 parts of silicon dioxide, 3 parts of hexamethyldisilazane-modified sodium silicoaluminate, 10 parts of barium sulfate, and 1 part of nano-titanium dioxide into the mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Embodiment 4

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 18 parts of silicon dioxide, 2 parts of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Embodiment 5

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 19 parts of silicon dioxide, 1 part of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Embodiment 6

This embodiment provides a rubber material for semiconductor seal rings, which is prepared by the following steps:
1) In a thousand-level dust-free workshop, add 100 parts of 3F 4013 perfluoroether rubber to an internal mixer at 140°C. After the rubber material is stabilized, continue to add 20 parts of silicon dioxide, 1 part of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Comparative Example 1

This comparative example provides a rubber material for semiconductor seal rings, and it is prepared by the following steps:
1) In a thousand-level dust-free workshop, add 100 parts of 3F 4013 perfluoroether rubber to an internal mixer at 140°C. After the rubber material is stabilized, continue to add 25 parts of silicon dioxide, 1 part of hexamethyldisilazane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The hexamethyldisilazane-modified sodium silicoaluminate is prepared using the process described in Embodiment 1.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Comparative Example 2

This comparative example provides a rubber material for semiconductor seal rings, and it is prepared by the following steps:
1) In a thousand-level dust-free workshop, add 100 parts of 3F 4013 perfluoroether rubber to an internal mixer at 140°C. After the rubber material is stabilized, continue to add 15 parts of silicon dioxide, 5 parts of sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Comparative Example 3

This comparative example provides a rubber material for semiconductor seal rings, and it is prepared by the following steps:
1) In a thousand-level dust-free workshop, add 100 parts of 3F 4013 perfluoroether rubber to an internal mixer at 140°C. After the rubber material is stabilized, continue to add 15 parts of silicon dioxide, 5 parts of dimethyl-dichlorosilane-modified sodium silicoaluminate, 10 parts of barium sulfate, and 1 part of nano-titanium dioxide into the internal mixer. After mixing evenly, discharge the mixture at 148 °C. Press the material on an open mill to form sheets and set it aside for 18 hours to obtain a masterbatch. The dimethyl-dichlorosilane-modified sodium aluminosilicate is prepared using the same process described in Embodiment 1, except that the hexamethyldisilazane is replaced with dimethyldichlorosilane.
2) The masterbatch obtained in step 1) undergoes a thin-pass process on the open mill. Then cut the masterbatch using left and right blades, wherein each side of the masterbatch is cut for 3 times. Adjust a roller speed of a front roller of the open mill to 12r/min, and adjust a roller speed of a rear roller of the open mill to 14r/min, then adjust a roller distance of the open mill to 0.6 mm, add 1 part of TAIC and 0.68 parts of bis-25 in turn, then create triangular folds for 20 times after the roller distance is adjusted to 0.4 mm, and take out the sheets. Perform a plate vulcanization in the thousand-level dust-free workshop at 160 °C, 11 MPa, for 4 minutes, to produce a vulcanized product, which is set aside for 16 hours for future use.
3) Put the vulcanized product obtained in step 2) into an oven for a second vulcanization at 230 °C, for 4h, and then obtain the rubber material for semiconductor seal rings after water grinding and drying.

### Comparative Example 4

This comparative example provides a rubber material for semiconductor seal rings, and it is prepared by the following steps:
1) In a thousand-level dust-free workshop, add 100 parts of 3F 4013 perfluoroether rubber to an open mill. Perform plasticization at a roller distance of 0.8mm for 3 minutes, with a roller speed of 12 r/min for a front roller of the open mill and 14 r/min for a rear roller of the open mill. Adjust the roller distance to 0.6mm, and then sequentially add 1 part of TAIC and 0.68 parts of bis-25. Create triangular folds for 20 times at a roller distance of 0.4mm, and then take out the sheets. Perform a plate vulcanization in the thousand-level dust-free workshop at 160 °C, 11 MPa, for 4 minutes, to produce a vulcanized product, which is set aside for 16 hours for future use.
2) Put the vulcanized product obtained in step 2) into an oven for a second vulcanization at 230 °C, for 4h, and then obtain the rubber material for semiconductor seal rings after water grinding and drying.

As shown in Table 1, the components of each embodiment (E) and comparative example (CE) are as follows:

**Table 1**

| | E 1 | E 2 | E 3 | E4 | E 5 | E 6 | CE 1 | CE 2 | CE 3 | CE 4 |
|---|---|---|---|---|---|---|---|---|---|---|
| Perfluoroether Rubber | 100. 0 | 100. 0 | 100. 0 | 100. 0 | 100. 0 | 100. 0 | 100. 0 | 100. 0 | 100. 0 | 100. 0 |
| Silicon Dioxide | 15.0 0 | 16.0 0 | 17.0 0 | 18.0 0 | 19.0 0 | 20.0 0 | 25.0 0 | 15.0 0 | 15.0 0 | |
| Hexamethyldisil azane-Modified Aluminosilicate | 5.00 | 4.00 | 3.00 | 2.00 | 1.00 | 1.00 | 1.00 | | | |
| Dimethyl-Dichlorosilane-Modified Aluminosilicate | | | | | | | | | 5.00 | |
| Unmodified Aluminosilicate | | | | | | | | 5.00 | | |
| Filler | 10.0 0 | 10.0 0 | 10.0 0 | 10.0 0 | 10.0 0 | 10.0 0 | 10.0 0 | 10.0 0 | 10.0 0 | |
| Colorant | 1.00 | 1.00 | 1.00 | 1.00 | 1.00 | 1.00 | 1.00 | 1.00 | 1.00 | |
| Co-Crosslinker | 1.00 | 1.00 | 1.00 | 1.00 | 1.00 | 1.00 | 1.00 | 1.00 | 1.00 | 1.00 |
| Crosslinker | 0.68 | 0.68 | 0.68 | 0.68 | 0.68 | 0.68 | 0.68 | 0.68 | 0.68 | 0.68 |

### Performance Testing:

Perform performance testing on the rubber material for semiconductor seal rings obtained from each embodiment and comparative example, and the standards and methods are as follows:

Rubber Hardness Testing: According to the ASTM D2240 & D1414 Standard test method for rubber property-Durometer Hardness, the hardness of the rubber materials is assessed.

Tensile Properties Testing: The GB/T 528-2009 standard, "Rubber, vulcanized or thermoplastic-Determination of tensile stress-strain properties," is used to determine the tensile strength, elongation at break, and 100% modulus of the rubber material.

Compression Set Testing: The ASTM D395-03 Standard test methods for rubber property-Compression Set is used to evaluate the permanent deformation performance of the rubber material under compression.

Plasma Etching Testing: In this test, the material undergoes plasma etching using O₂ and CH₄ ion etching gases at 100°C for 60 minutes, with a power of 800 watts and a gas flow rate of 80 sccm. The change in particle deposition weight is calculated using the following formula: change in particle deposition weight (%) = (weight before etching - weight after etching)/weight before etching * 100.

Properties of the rubber materials for semiconductor seal rings of embodiments 1-6 and comparative examples 1-4 are shown in Table 2:

**Table 2**

| | E 1 | E 2 | E 3 | E4 | E 5 | E 6 | CE 1 | CE 2 | CE 3 | CE 4 |
|---|---|---|---|---|---|---|---|---|---|---|
| Hardness, Shore M | 84 | 84 | 84 | 84 | 84 | 84 | 86 | 84 | 84 | 67 |
| Tensile strength, MPa | 11.80 | 12.35 | 13.57 | 14.52 | 13.62 | 13.24 | 15.12 | 10.93 | 11.89 | 7.53 |
| Elongation at break, % | 145 | 148 | 154 | 161 | 145 | 141 | 135 | 149 | 144 | 202 |
| 100% Modulus, MPa | 7.24 | 7.27 | 7.34 | 7.49 | 7.32 | 7.22 | 8.12 | 7.11 | 7.19 | 1.9 |
| Compression set (AS568-214 O-ring, 70h @ 204°C) | 30% | 30% | 28% | 26% | 28% | 28% | 33% | 32% | 37% | 22% |
| Change in particle deposition weight after O₂ etching, % | 1.53 | 1.54 | 1.50 | 1.48 | 1.40 | 1.34 | 1.24 | 1.70 | 1.62 | 3.52 |
| Change in particle deposition weight after CH₄ etching, % | 2.63 | 2.59 | 2.46 | 2.57 | 2.51 | 2.45 | 2.34 | 2.87 | 2.56 | 4.80 |

According to Tables 1 and 2, all components of Embodiment 1, Comparative Example 2, and Comparative Example 3 are in the same proportion. In Comparative Example 2, the rubber material for semiconductor sealing rings derived from unmodified silicoaluminate has a compression set of 32%. This exceeds the acceptable limit of 30%, beyond which the sealing ring fails to function properly and cannot provide the necessary sealing effect. In Comparative Example 3, the rubber material derived from dimethyl-dichlorosilane-modified silicoaluminate performs even worse, with a compression set as high as 37%. In Embodiment 1, the compression set of the rubber material for semiconductor seal rings obtained by modifying aluminosilicate with hexamethyldisilazane is no more than 30%, which ensures the seal rings function properly; This is due to the fact that in Embodiment 1, the hexamethyldisilazane-modified silicoaluminate is alkaline, which can reduce the formation of hydrogen bonds on the surface of the silicoaluminate, consume the HF acid produced during processing, increase the crosslinking density of the perfluoroether rubber, and thereby reduce the compression set. In contrast, the dimethyl-dichlorosilane-modified silicoaluminate in Comparative Example 3 is acidic, and its effect is just the opposite. However, both Embodiment 1 and Comparative Example 3 use modified silicoaluminate, and the tensile strength of their final products is higher than that of the product obtained from the unmodified silicoaluminate used in Comparative Example 2. This indicates that the dispersion of modified silicoaluminate in the mixed rubber is better, and therefore its reinforcing effect is better. Therefore, the use of hexamethyldisilazane-modified aluminosilicate can not only play a reinforcing role, but also reduce the compression set.

Compared with the rubber material for semiconductor sealing rings obtained by simply cross-linking the perfluoroether rubber in Comparative Example 4, the hardness, tensile strength, and 100% Modulus of Embodiment 1 are enhanced, and the particle deposition after O₂ and CH₄ etching are also significantly reduced. Although the elongation at break is reduced compared to Comparative Example 1, Embodiment 1 still meets the requirements for its application as a sealing ring on equipment. The perfluoroether rubber in Embodiment 1 of the present disclosure, which has been modified with components such as filler, colorant, and modified silicoaluminate, exhibits a balanced set of properties, which makes it even more suitable for use as a material for sealing rings.

It can be seen from the data in Table 1 and Table 2 that, among Embodiments 1 to 6 and Comparative Example 1, the ratios of silicon dioxide and hexamethyldisilazane-modified silicoaluminate are adjusted within a certain range, while the ratios of other components remain constant, the compression set of the product first decreases and then increases as the amount of silicon dioxide increases and the amount of hexamethyldisilazane-modified silicoaluminate decreases. However, when the silicon dioxide content reaches 25 parts in Comparative Example 1, the compression set of the product exceeds 30%, which is not suitable for practical use, and the elongation at break also significantly drops to 135% in Comparative Example 1, which is not ideal for the installation and subsequent use of the sealing ring. In comparison to the perfluoroether rubber that is directly crosslinked in Comparative Example 4, the plasma etching performance in the presence of O₂ and CH₄ is significantly enhanced in Embodiments 1-6. Furthermore, there are noticeable improvements in hardness, tensile strength, and 100% modulus. This demonstrates that the comprehensive performance of the perfluoroether rubber, once modified according to the present disclosure, exhibits a balanced and overall enhancement.

In summary, the rubber material for semiconductor sealing rings of the present disclosure uses widely available perfluoroether rubber as the base material, making it more cost-effective. It also incorporates a large amount of filler for co-blending modification, which further reduces the cost. This process enhances its hardness, tensile strength, and 100% modulus. Although the elongation at break and compression permanent deformation performance have decreased within a defined range, they still meet operational requirements. Moreover, the material's resistance to CH₄ and O₂ plasmas has been significantly enhanced. The presently disclosed rubber material has: hardness Shore M: 85 ± 5, tensile strength ≥ 11.0MPa, elongation at break ≥ 140%, 100% Modulus ≥ 7.2MPa, compression set ≤ 30%, and weight change rate ≤ 3% after etching, indicating that the rubber material is highly suitable for semiconductor equipment processing. Therefore, the present disclosure effectively overcomes various shortcomings of the prior art and has a high industrial value.

The above-mentioned embodiments are merely illustrative of the principle and effects of the present disclosure instead of restricting the scope of the present disclosure. Any person skilled in the art may modify or change the above embodiments without violating the principle of the present disclosure. Therefore, all equivalent modifications or changes made by those who have common knowledge in the art without departing from the spirit and technical concept disclosed by the present disclosure shall be still covered by the claims of the present disclosure.

## Claims

1. A rubber material for semiconductor seal rings, **characterized in that** it comprises following components in parts by weight:
100 to 120 parts of perfluoroether rubber, 15 to 20 parts of silicon dioxide, 1 to 5 parts of modified aluminosilicate, 10 to 15 parts of filler, 1 to 2 parts of colorant, 0.5 to 2 parts of crosslinking agent, and 0.5 to 4 parts of co-crosslinking agent; wherein the modified aluminosilicate is obtained by surface modification of aluminosilicate by hexamethyldisilazane;
wherein the modified aluminosilicate is prepared by: performing ultrasonic dispersion on the aluminosilicate in an organic solvent to obtain a suspension, adding hexamethyldisilazane, performing ultrasonic mixing, heating for reaction, centrifuging at room temperature, and vacuum drying to obtain the modified aluminosilicate;
wherein a mass percentage of the hexamethyldisilazane to the aluminosilicate is 1-2 wt %.

2. The rubber material for semiconductor seal rings according to claim 1, wherein the perfluoroether rubber is obtained by copolymerization of tetrafluoroethylene, perfluoroalkyl vinyl ether, and halogen-containing vulcanization point monomers; and/or, the Mooney viscosity (ML1 +10) of the perfluoroether rubber at 121 °C is 30 to 100.

3. The rubber material for semiconductor seal rings according to claim 2, wherein the perfluoroalkyl vinyl ether is perfluoromethyl vinyl ether;
and/or halogen in the halogen-containing vulcanization point monomers is iodine or bromine.

4. The rubber material for semiconductor seal rings according to claim 1, wherein the silicon dioxide has a specific surface area of 60-100m²/g, and a pH value of 7-10; and/or, the aluminosilicate used to obtain the modified aluminosilicate comprises one or more of sodium aluminosilicate, and calcium aluminosilicate, wherein the aluminosilicate has a D50 particle size ≤ 2µm;
and/or the filler comprises one or more of sulfate, carbonate, silicate, metal oxide, and hydroxide;
and/or, the colorant comprises one or more of titanium dioxide, zinc barium white, zinc white, and zinc sulfide;
and/or, the crosslinking agent comprises one or more of 2,5-dimethyl-2,5-bis (tert-butylperoxy) hexane, and 1,3-bis (tert-butylperoxyisopropyl) benzene;
and/or, the co-crosslinking agent comprises one or more of triallyl isocyanurate, and trimethylallyl isocyanate.

5. The rubber material for semiconductor sealing rings according to any one of claims 1 to 4, wherein properties of the rubber material for semiconductor sealing rings comprise one or more of:
a) hardness, Shore M: 85 ± 5;
b) tensile strength ≥ 11.0 MPa;
c) elongation at break ≥ 140%;
d) 100% modulus ≥ 7.2 MPa;
e) compression set ≤ 30%;
f) weight change rate after etching ≤ 3%.

6. A method for preparing the rubber material for semiconductor seal rings according to any one of claims 1 to 5, **characterized in that** it comprises:
1) mixing the perfluoroether rubber, silicon dioxide, modified aluminosilicate, filler, and colorant evenly to obtain a masterbatch;
2) adding the co-crosslinking agent and crosslinking agent to the masterbatch obtained in step 1), performing a plate vulcanization to produce a vulcanized product, and setting the vulcanized product aside for future use;
3) performing a second vulcanization on the vulcanized product obtained in step 2), and obtaining the rubber material for semiconductor seal rings after water grinding and drying.

7. The method for preparing the rubber material for semiconductor seal rings according to claim 6, **characterized in that**, in step 1), the modified aluminosilicate is prepared by: performing ultrasonic dispersion on the aluminosilicate in an organic solvent to obtain a suspension, adding hexamethyldisilazane, performing ultrasonic mixing, heating for reaction, centrifuging at room temperature, and vacuum drying to obtain the modified aluminosilicate.

8. The method for preparing the rubber material for semiconductor seal rings according to claim 7, **characterized in that** the organic solvent comprises one or more of toluene, and ethanol;
and/or, a duration of the ultrasonic dispersion is 30 to 40 min;
and/or a mass percentage of the hexamethyldisilazane to the aluminosilicate is 1-2 wt %;
and/or, a duration of the ultrasonic mixing is 4 to 8 min;
and/or, a temperature of the heated reaction is 70-100 °C;
and/or, a duration of the heated reaction is 5 to 8h;
and/or, the centrifuging is repeated for 4-6 times;
and/or, a centrifugal rate of the centrifuging is 10000 to 15000r/min;
and/or a temperature of the vacuum drying is 100-130°C;
and/or a duration of the vacuum drying is 7 to 10h.

9. The method for preparing the rubber material for semiconductor seal rings according to claim 6, **characterized in that**, in step 1), the perfluoroether rubber, silicon dioxide, modified aluminosilicate, filler, and colorant are mixed at 120-140 °C;
and/or, in step 1), after the components are mixed evenly, they are discharged to an open mill at 145 to 165 °C to form sheets, and set aside for more than 16 hours to obtain the masterbatch;
and/or, in step 2), before adding the co-crosslinking agent and the crosslinking agent, the masterbatch undergoes a thin-pass process, then the masterbatch is cut using left and right blades, wherein each side of the masterbatch is cut 2 to 4 times, then a roller speed of a front roller of the open mill is adjusted to 12 to 14 r/min, and a roller speed of a rear roller of the open mill is adjusted to 14 to 16 r/min, then a roller distance of the open mill is adjusted to 0.5 to 0.8 mm, then co-crosslinking agent and the crosslinking agent are added;
and/or, in step 2), a temperature of the plate vulcanization is 155 to 190 °C; and/or, in step 2), a pressure of the plate vulcanization is 10-15MPa;
and/or, in step 2), a duration of the plate vulcanization is 4-7min;
and/or, in step 2), the vulcanized product is set aside for 16 to 20h;
and/or, in step 3), the second vulcanization is carried out in an oven;
and/or, in step 3), a temperature of the second vulcanization is 230-290 °C;
and/or, in step 3), a duration of the second vulcanization is 4-16h.

10. Use of the rubber material for semiconductor seal rings according to any one of claims 1 to 5 in the field of semiconductor processing.
